# EUROPÄISCHE PATENTSCHRIFT

(11) **EP 1 274 496 B1**
(45) Veröffentlichungstag und Bekanntmachung des Hinweises auf die Patenterteilung: **08.02.2006**
(21) Anmeldenummer: 01921327.1
(22) Anmeldetag: 13.03.2001
(51) Int. Cl.: B01D 33/21, B01D 33/39

(54) **VORRICHTUNG ZUR FILTRATION VON FLIESSFÄHIGEN MEDIEN**
DEVICE FOR FILTERING FLOWABLE MEDIA
DISPOSITIF DE FILTRATION DE MILIEUX FLUIDES

(30) Priorität: 19.04.2000 DE 10019671; 19.04.2000 DE 10019674; 19.04.2000 DE 10019672
(43) Veröffentlichungstag der Anmeldung: 15.01.2003
(73) Patentinhaber: Aaflowsystems GmbH & Co. KG, 73457 Essingen (DE)
(72) Erfinder: BLÄSE, Dieter, 73557 Mutlangen (DE); OLAPINSKI, Hans, 73773 Aichwald (DE); FEUERPEIL, Hans-Peter, 73529 Schwäbisch Gmünd (DE)
(74) Vertreter: Dr. Weitzel & Partner
(86) Internationale Anmeldenummer: PCT/EP2001/002772
(87) Internationale Veröffentlichungsnummer: WO 2001/080970

(56) Entgegenhaltungen:
- EP-A- 0 159 597
- DE-A- 19 502 848
- GB-A- 2 057 284
- US-A- 1 264 635
- PATENT ABSTRACTS OF JAPAN vol. 1999, no. 13, 30. November 1999 (1999-11-30) & JP 11 226317 A (MITSUBISHI KAKOKI KAISHA LTD), 24. August 1999 (1999-08-24)

## Beschreibung

Die Erfindung betrifft eine Vorrichtung zum Filtrieren von Medien, insbesondere von solchen Medien, die abrasiven Charakter haben, und die anschließend in einer Membrananlage behandelt werden sollen (Teilgebiet "Siebscheiben").

Die Erfindung betrifft femer eine Vorrichtung zum Filtrieren von Medien mit Membrankörpem, beispielsweise Membranrohren oder Membranscheiben. Solche Vorrichtungen werden in den unterschiedlichsten Industriezweigen eingesetzt, beispielsweise in der Lebensmittelindustrie oder in der Papierindustrie (Teilgebiet "Membranscheiben/Dummyscheiben").

Die Erfindung betrifft schließlich eine Vorrichtung zum Filtrieren von Medien mit Membrankörpem, beispielsweise Membranrohren oder Membranscheiben. Solche Vorrichtungen werden in den unterschiedlichsten Industriezweigen eingesetzt, beispielsweise in der Lebensmittelindustrie (Teilgebiet "Membranscheiben/Membranscheiben").

Filtervorrichtungen sind in einer Vielzahl von Ausführungsformen bekannt geworden. Sie sollen ganz allgemein eine hohe Menge von Medium pro Zeiteinheit bewältigen können, dabei aber eine hohe Trennschärfe aufweisen, das heißt eine möglichst saubere Trennung von Gutstoff und Grobstoff bewirken. Diese beiden Funktionen stehen in einem Zielkonflikt zueinander. Man kann zwar den Durchsatz erhöhen, indem man die Durchtrittsöffnungen vergrößert. Damit wird aber gleichzeitig die Trennschärfe herabgesetzt.

Ein weiteres Problem besteht darin, daß sich an den Filterflächen - gleich welcher Art - über kurz oder lang ein Filterkuchen niederschlägt, der den Durchsatz beeinträchtigt und die Charakteristik der Vorrichtung im Laufe der Zeit verändert. Um das Entstehen dieses Filterkuchens oder der Filterschicht zu verhindern oder zu verringern, werden besondere Einrichtungen vorgesehen, beispielsweise Räumerleisten, die über die Filterfläche hinwegstreichen. Auch werden Wirbelerzeuger wie propellerartige Schrauben vorgesehen, die das Medium im Bereich der Filterfläche aufwirbeln.

Handelt es sich um scheibenförmige Membrankörper, so wird der Membrarischeibe das Medium auf der einen Seite ihres Umfangs zugeführt, und auf der anderen Seite wird das Retentat abgeleitet. Das Permeat wird nach Durchgang durch die Membran abgeführt.

Eine entscheidende Anforderung an Membraneinrichtungen besteht in der hohen Trennschärfe. So sollen die unerwünschten Stoffe möglichst sauber von den erwünschten Stoffen abgetrennt werden. Eine weitere Anforderung ist eine hohe Filtrationsleistung in Menge pro Zeiteinheit bei gegebenem Raumaufwand. Ferner spielt der Energiebedarf eine ganz wichtige Rolle.

Die Filtrationsleistung oder der Durchsatz von Membraneinrichtungen nimmt nach einer gewissen Betriebsdauer ab, und zwar durch Anlagerung von Feststoffen. Um dies zu verhindern oder zu verringern, hat man Gegenmaßnahmen getroffen. So versucht man beispielsweise, die Membranfläche von sich anlagernden Feststoffen dadurch freizuhalten, daß man oberhalb der Membranfläche einen Schraubenpropeller anordnet, der das darüberbefindliche Medium in Turbulenz versetzt. Auch sind Räumerleisten bekannt, die über die Membranfläche hinwegstreichen.

Handelt es sich um scheibenförmige Membrankörper, so wird der Membranscheibe das Medium auf der einen Seite ihres Umfangs zugeführt, und auf der anderen Seite wird das Retentat abgeleitet. Das Permeat wird nach Durchgang durch die Membran abgeführt.

Eine entscheidende Anforderung an Membraneinrichtungen besteht in der hohen Trennschärfe. So sollen die unerwünschten Stoffe möglichst sauber von den erwünschten Stoffen abgetrennt werden. Eine weitere Anforderung ist eine hohe Permeationsleistung in Menge pro Zeiteinheit bei gegebenem Raumaufwand. Ferner spielt der Energiebedarf eine ganz wichtige Rolle.

Die Permeationsleistung oder der Durchsatz von Membraneinrichtungen nimmt nach einer gewissen Betriebsdauer ab, und zwar durch Anlagerung von Feststoffen. Um dies zu verhindern oder zu verringern, hat man Gegenmaßnahmen getroffen. So versucht man beispielsweise, die Membranfläche von sich anlagernden Feststoffen dadurch freizuhalten, daß man oberhalb der Membranfläche einen Schraubenpropeller anordnet, der das darüberbefindliche Medium in Turbulenz versetzt. Auch sind Räumerleisten bekannt, die über die Membranfläche hinwegstreichen.

Aus der DE 195 02 848 A1 ist ein Rotationsscherspaltfilter bekanntgeworden, bei dem ineinandergreifende Scheibenfilter so angetrieben werden, daß diese gleichsinnig und mit der gleichen Umlaufgeschwindigkeit rotieren. Durch eine richtige Abstimmung der Drehzahl sowie der Spaltbreite der überdeckten Filterflächen werden Turbulenzen erzeugt, die das Setzen von Partikeln auf den Filterflächen verhindern sollen. In der Praxis hat sich jedoch eine solche Einstellung als schwierig herausgestellt. Außerdem zeigt die zu behandelnde Flüssigkeit bei einer derartigen Filteranordnung die Tendenz, sich zum Zentrum der Filterscheiben zu bewegen, so daß die sich dort ansammelnden Flüssigkeitsquanten nicht behandelt werden. Ein weiterer Filter dieses Typs, bei dem die genannten Probleme auftreten, wird durch die JP 11 226317 A offenbart.

Der Erfindung liegt die Aufgabe zugrunde, Vorrichtungen der genannten drei Bauarten - Siebscheiben; Membranscheiben/Dummyscheiben; Membranscheiben/Membranscheiben - derart zu gestalten, daß sie dazu in der Lage ist, große Mengen an zu filterndem Medium zu bewältigen, dabei eine große Trennschärfe zu erzielen und somit alle unerwünschten Stoffe, insbesondere abrasiven Stoffe aus dem Medium herauszuholen, daß sie einen geringen Raumbedarf hat, und daß sie mit geringerem Energieaufwand als bekannte Vorrichtungen auskommt. Dabei wird unter "Dummyscheiben" eine nichtfiltierende Scheibe verstanden. Diese kann eine geschlossene oder offene Oberfläche aufweisen, glatt oder strukturiert.

Diese Aufgabe wird durch die Merkmale der unabhängigen Ansprüche gelöst.

Durch das Ineinandergreifen von scheibenförmigen Körpern des einen Hohlkörperpaketes in die Zwischenräume zwischen einander benachbarten scheibenförmigen Körpern des anderen Paketes kommt es während des Betriebes bei der Relativbewegung der Körper der beiden Pakete zu einem Überstreichen der betreffenden Flächen. Dies führt zu einer Reinigung dieser Fläche und damit zu einer Behinderung oder Auflösung von Anlagerungen von Feststoffen.

Bei der Relativbewegung ist jeweils der Außenbereich der einen Scheibe dem Innenbereich der anderen Scheibe zugeordnet. Laufen die Scheiben der beiden Scheibenpakete gemäß der Erfindung im selben Drehsinn um, so trifft die hohe Umfangsgeschwindigkeit der einen Scheibe auf die niedrige Umfangsgeschwindigkeit der anderen Scheibe, so daß die Relativgeschwindigkeit in radialer Richtung gesehen im Überdeckungsbereich im wesentlichen konstant ist. Dies ist günstig für eine gleichmäßige Räumerwirkung, und damit auch für eine optimale Ausnutzung der Siebfläche, was den Durchsatz günstig beeinflußt.

Beim Teilgebiet "Siebscheiben" wird unter dem Ausdruck "Sieb" jede Art von Siebmaterial verstanden. So kann es sich beispielsweise um ein Gewebe oder ein Gewirk handeln. Auch Schlitzbleche oder Lochbleche kommen in Betracht. Die Größe der Sieböffnungen beträgt dabei wenigstens 5 µ. Vorzugsweise liegt sie bei über 20 µ.

Die Erfindung ist anhand der Zeichnung näher erläutert.

Bezüglich des Teilgebietes "Siebscheiben" ist im einzelnen folgendes dargestellt:
- Figur 1: zeigt eine Vorrichtung gemäß der Erfindung in einer schematischen Aufrißansicht.
- Figur 2: zeigt den Gegenstand von Figur 1 in Draufsicht.
- Figur 3: zeigt eine Variante des Gegenstandes von Figur 1 in Draufsicht.
- Figur 4: zeigt einen Ausschnitt aus dem Gegenstand von Figur 1 in vergrößerter Darstellung.

Bezüglich des Teilgebietes "Membranscheiben/Dummyscheiben" ist im einzelnen folgendes dargestellt:
- Figur 5: zeigt eine solche Vorrichtung in einer schematischen Aufrißansicht.
- Figur 5a: zeigt einen Ausschnitt aus dem Gegenstand von Figur 5.
- Figur 6: zeigt den Gegenstand von Figur 5 in einer Draufsicht.
- Figur 7: zeigt eine abgewandelte Ausführungsform des Gegenstandes von Figur 5, wiederum in Draufsicht.
- Figur 8: zeigt ein Segment als Bestandteil einer Membranscheibe in Draufsicht.
- Figur 9: zeigt eine Schnittansicht gemäß der Schnittlinie IX - IX von Figur 8 in einer Abwicklung.

Die Figuren 10 und 11 zeigen zwei weitere Ausführungsformen von Segmenten in Draufsicht.
- Figur 12: veranschaulicht in einem Axialschnitt eine Membranscheibe mit einer bestimmten Kanalkonfiguration.
- Figur 13: zeigt eine Membranscheibe in Seitenansicht.

Bezüglich des Teilgebietes "Membranscheiben/Membranscheiben" ist im einzelnen folgendes dargestellt:
- Figur 14: zeigt eine solche Vorrichtung in einer schematischen Aufrißansicht.
- Figur 15: zeigt den Gegenstand von Figur 14 in einer Draufsicht.

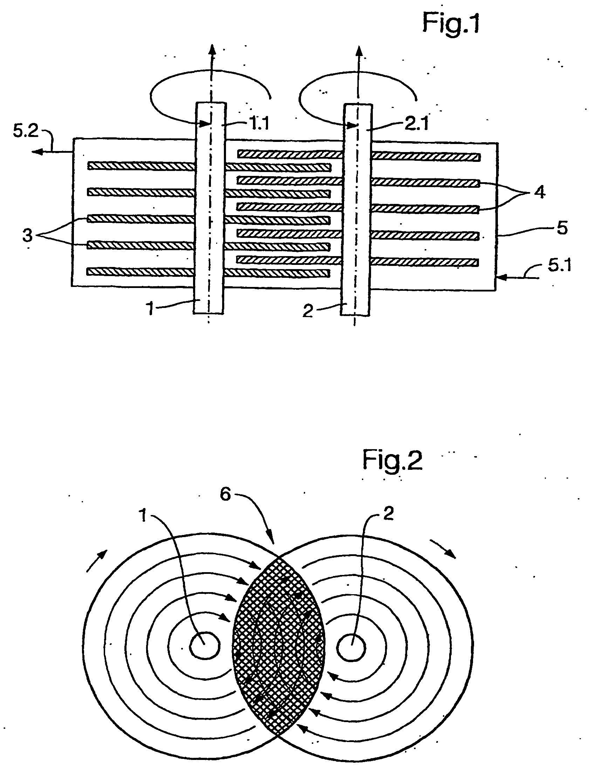

Die in Figur 1 gezeigte Vorrichtung dient der Filtration von Medien jeglicher Art, beispielsweise von Prozeßströmen in der lebensmittelverarbeitenden Industrie, z. B. bei der Stärkeverarbeitung.

Die Vorrichtung weist eine erste und eine zweite Hohlwelle 1, 2 auf. Die Hohlwellen sind stehend angeordnet Sie sind an ihren unteren Enden geschlossen.

Der ersten Hohlwelle 1 sind scheibenförmige Hohlkörper 3 zugeordnet, die hier als Paket bezeichnet werden. Wie man sieht, umfaßt das Paket insgesamt fünf solcher scheibenartiger Hohlkörper. Dabei könnte die Anzahl auch variieren. Die Hohlkörper 3 sind mit der Hohlwelle 1 drehfest verbunden. Zugleich stehen die Innenräume der Hohlkörper 3 mit dem Innenraum der Hohlwelle 1 in leitender Verbindung. Die Hohlwelle 1 ist angetrieben, so daß sie selbst sowie die Hohlkörper 3 um ihre eigene Achse umlaufen.

Der Hohlwelle 2 sind Hohlkörper 4 zugeordnet, die ebenfalls ein Paket miteinander bilden. Die aus Hohlwelle 2 und Hohlkörpern 4 gebildete Einheit ist identisch aufgebaut, wie die aus Hohlwelle 1 und Hohlkörpern 3 gebildete Einheit. Gleichwohl wären Abweichungen möglich. So könnten beispielsweise die Hohlkörper 4 einen größeren Durchmesser haben, als die Hohlkörper 3. Im vorliegenden Falle sind die Hohlkörper 3, 4 in Draufsicht gesehen kreisscheibenförmig. Sie könnten jedoch auch andere Gestalten haben, beispielsweise oval sein.

Die beiden genannten Einheiten sind in einem Behälter 5 angeordnet Der Behälter 5 weist einen Einlaß 5.1 für das zu behandelnde Medium auf, ferner einen Auslaß 5.2 für sogenanntes Retentat bzw. Konzentrat (Schlamm) genannt.

Die beiden Hohlwellen 1, 2 weisen an ihren oberen Enden jeweils Auslässe 1.1 beziehungsweise 2.1 für Filtrat auf.

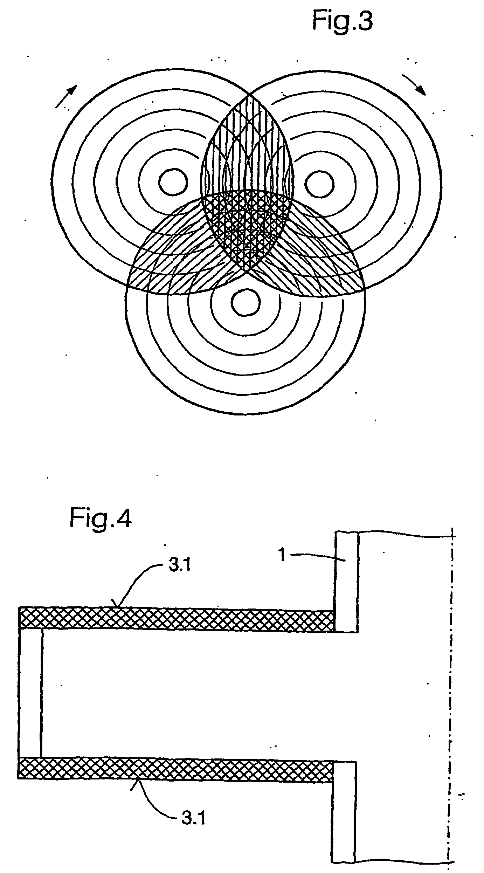

Figur 4 läßt den Aufbau der Hohlkörper anhand eines einzelnen Hohlkörpers 3 erkennen. Wie man sieht, sind die Filterflächen 3.1 aus einem Siebmaterial gebildet. Der Innenraum des Hohlkörpers 3 steht mit der Hohlwelle 1 in leitender Verbindung.

Als Filtermaterial kommt jegliches Material in Betracht, beispielsweise ein Siebgewebe ähnlich dem Gewebe eines Papiermaschinensiebes, ein Lochblech, ein Schlitzblech oder dergleichen.

Aus den Figuren 1 und 4 ergibt sich die Arbeitsweise der Vorrichtung. Das zu behandelnde Medium wird durch den Einlaß 5.1 dem Behälter 5 zugeführt. Von diesem Medium gelangt der sogenannte Gutstoff oder das Filtrat in den Innenraum des scheibenartigen Hohlkörpers 3 beziehungsweise 4, während das Retentat durch die Filterfläche 3.1 zurückgehalten wird. Das Filtrat gelangt sodann zum Innenraum der betreffenden Hohlwelle 1, 2 und wird über deren Auslässe 1.1, 2.1 abgeführt. Das Retentat hingegen gelangt zum Auslaß 5.2 des Behälters, wo es ebenfalls abgezogen wird.

Figur 2 zeigt eine Draufsicht auf die beiden Pakete gemäß Figur 1. Man erkennt wieder die beiden Hohlwellen 1, 2, die der Abfuhr von Filtrat dienen. Die Scheiben 3, 4 überlappen sich auf einem Teilbereich 6. Die Scheiben 3 des einen Paketes und die Scheiben 4 des anderen Paketes laufen im selben Drehsinn um, nämlich im Uhrzeigersinn. Im Überlappungsbereich ergibt sich eine Turbulenz-Reinigungszone. Durch diese Turbulenz wird ein Reinigungseffekt auf die Filterflächen 3.1 ausgeübt.

Die Filtrationsleistung ist sehr hoch. Dies bedeutet, daß eine große Menge Medium pro Zeiteinheit durch die Vorrichtung hindurchgesetzt werden kann. Dabei ist der spezifische Energiebedarf sehr niedrig.

Die in Figur 3 dargestellte Konfiguration zeigt drei Pakete in symmetrischer Anordnung.

Es ist auch denkbar, eine noch größere Anzahl von Paketen vorzusehen. Dabei kann ein Paket zentral angeordnet sein, während die übrigen Pakete kreisförmig um dieses zentrale Paket herumgruppiert sind. Eine solche Ausführungsform ist nicht dargestellt.

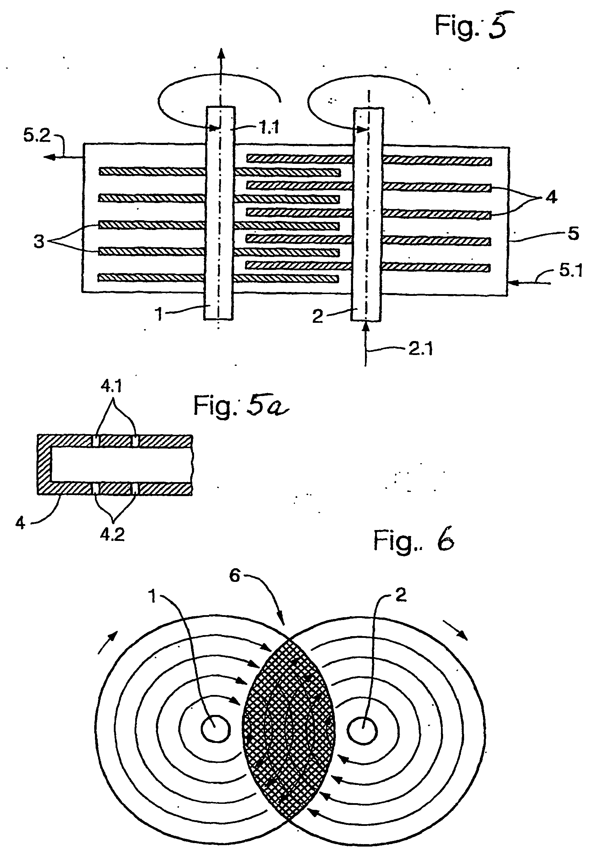

Wie man aus Figur 5 erkennt, weist die Vorrichtung zwei Hohlwellen 1, 2 auf. Den beiden Hohlwellen ist jeweils ein Scheibenpaket 3 beziehungsweise 4 zugeordnet. Die Scheiben sind parallel zueinander angeordnet. Die Scheiben 3 sind mit der Hohlwelle 1 drehfest verbunden, und die Scheiben 4 mit der Hohlwelle 2.

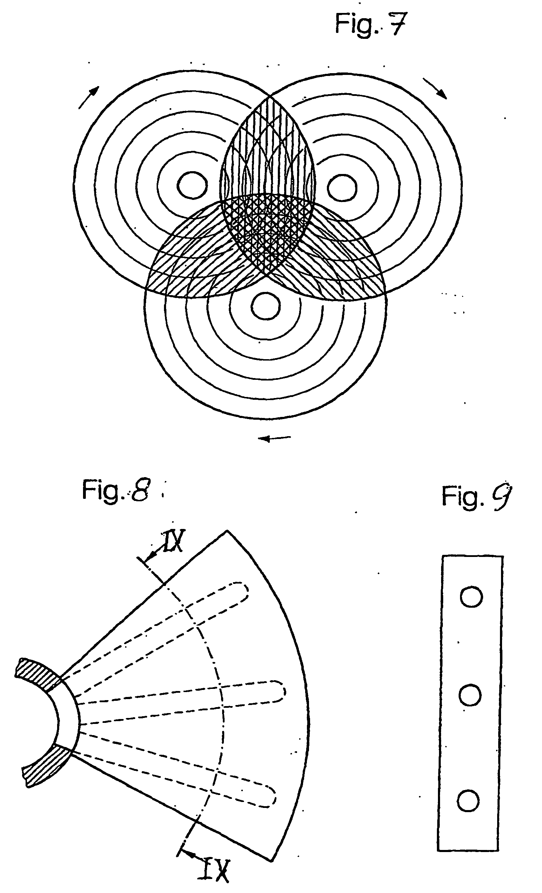

Die Scheiben 3 bestehen aus keramischem Material. Wie aus den Figuren 8 und 9 erkennbar, sind sie mit Kanälen versehen. Da sich die Figuren 8 und 9 auf ein Segment der Scheiben 3 beziehen, erkennt man dort die Kanäle 3.1. Die Kanäle sind radial angeordnet. Sie verlaufen somit vom Umfangsbereich des Segmentes zur Hohlwelle 1 und stehen mit deren Innenraum in leitender Verbindung. Gewisse Abweichungen von der radialen Richtung sind möglich.

Die betreffende Hohlwelle sowie die.zugeordneten Scheiben werden hier als "Paket" bezeichnet.

Während die Scheiben 3 Membranscheiben sind, können die Scheiben 4 aus einem anderen Material bestehen. Sie sind innen hohl. Ihre Hohlräume stehen mit dem Innenraum der Hohlwelle 2 in leitender Verbindung.

Außerdem weisen die Scheiben 4 düsenartige Bohrungen 4.1, 4.2 auf ihren Seiten auf, die gegen die Membranscheiben 3 gerichtet sind.

Im übrigen ist das aus Hohlwelle 1 und Scheiben 3 gebildete Paket genau gleich gestaltet und gleichartig aufgebaut, wie das aus Hohlwelle 2 und den Scheiben 4 aufgebaute Paket. Es wären jedoch auch Abweichungen hiervon möglich. So könnten beispielsweise die Scheiben des einen Paketes einen größeren Durchmesser als die Scheiben des anderen Paketes haben. Im vorliegenden Falle sind die Scheiben kreisförmig. Auch hier wären Abweichungen möglich. Beispielsweise käme eine ovale Form in Betracht.

Die beiden Pakete sind in einem Behälter 5 angeordnet. Der Behälter 5 weist einen Einlaß 5.1 sowie einen Auslaß 5.2 auf. Die beiden Hohlwellen 1, 2 weisen an ihren oberen Enden Auslässe 1.1 beziehungsweise 2.1 auf.

Die Vorrichtung arbeitet wie folgt:

Dem Behälter 5 wird durch dessen Einlaß 5.1 zu behandelndes Medium zugeführt. Außerdem wird Medium durch einen Einlaß 2.1 der Hohlwelle 2 zugeführt. Aus der Hohlwelle 2 gelangt Medium in den Innenraum der hohlen Scheiben 4 und von dort durch die Bohrungen 4.1, 4.2 zu den Membranscheiben 3, auf denen es aufprallt.

Wie aus den Figuren 8 bis 12 ersichtlich, sind die Membranscheiben von Kanälen 3.1 durchzogen. Das von dem keramischen Material aus dem Medium abgetrennte Permeat strömt in den Kanälen 3.1 zur Hohlwelle 1. Es tritt an deren Auslaß 1.1 aus.

Das Retentat hingegen wird am Auslaß 5.2 des Behälters 5 abgezogen.

Aus der Darstellung gemäß Figur 6 erkennt man, daß die Membranscheiben 3 die Scheiben 4 des anderen Paketes überlappen. Im Überlappungsbereich 6 entsteht eine Turbulenz im Medium. Diese hat eine Reinigungswirkung an der Oberfläche der Membranscheiben zur Folge. Die spezifische Permeationsleistung wird hoch, das heißt der Energiebedarf pro Mengeneinheit wird hierdurch besonders klein.

Bei der in Figur 7 gezeigten Ausführungsform sind drei Pakete vorgesehen. Diese sind wiederum in einem Behälter angeordnet - hier nicht dargestellt -.

Eine weitere Möglichkeit besteht darin, eine noch größere Anzahl von Paketen innerhalb ein- und derselben Vorrichtung vorzusehen. So kann beispielsweise ein Paket zentral angeordnet werden, während die übrigen Pakete konzentrisch um das zentrale Paket herumgruppiert werden.

Aus den Figuren 8 und 9 erkennt man, daß die einzelne Membranscheibe 3, 4 aus einer Mehrzahl von Segmenten aufgebaut sein kann. Das hier dargestellte Kreissegment ist somit Bestandteil einer Membranscheibe 3. Die Membranscheiben können jedoch auch ganz und gar aus einem einzigen Teil aufgebaut sein.

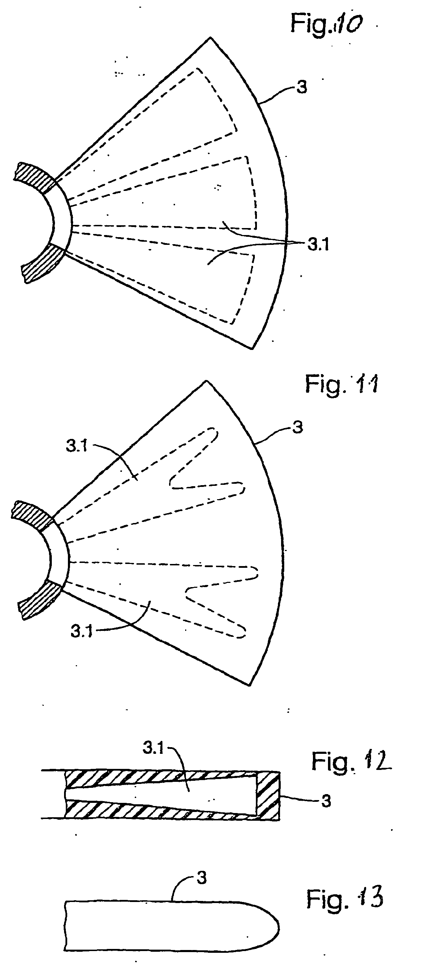

Die in den Figuren 9 und 10 dargestellten Membranscheiben 3 weisen Permeat-Kanäle 3.1 bestimmter Konfigurationen auf. We man sieht, verjüngen sich die Kanäle in dieser Draufsicht gesehen von außen nach innen. Sie sind somit keilförmig.

Bei der Ausführungsform gemäß Figur 10 sind die Kanäle 3.1 wiederum keilförmig, haben jedoch im radial äußeren Bereich jeweils eine Einbuchtung. Der Kanal hat somit in dieser Draufsicht eine Art Astgabelform.

Der Sinn dieser Kanalgestaltung besteht darin, möglichst kurze Wege von der Membranscheiben-Oberfläche zum Permeat-Ableitkanal zu erzielen.

Ein anderer Effekt wird erzielt durch die in Figur 12 gezeigte Kanalgestaltung - diesmal in einem Axialschnitt durch das Scheibenpaket gesehen. Wie man sieht, verjüngt sich der Kanal hier wiederum von außen nach innen. Bei einer rotierenden Scheibe steht das Permeat im Außenbereich der Scheibe unter leicht erhöhtem Druck. Die geschilderte Gestaltung des Kanales kompensiert diesen erhöhten Druck.

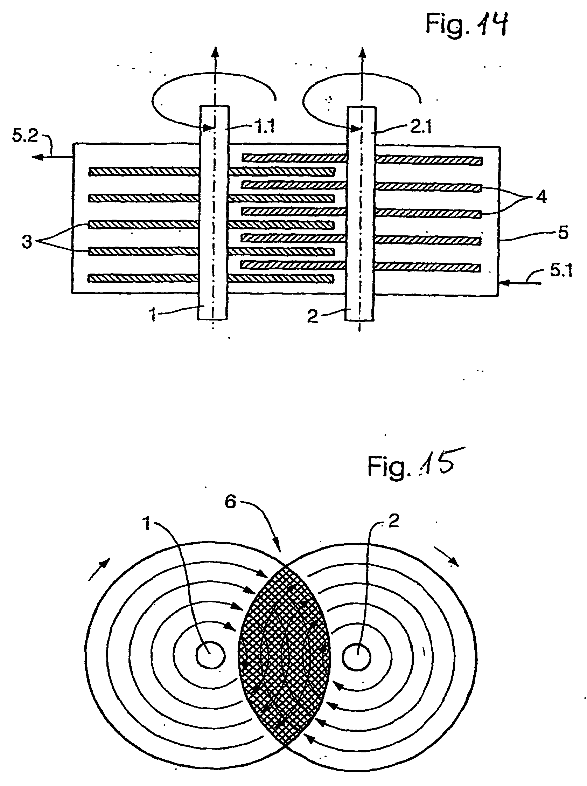

Aus Figur 13 erkennt man, daß die Membranscheibe 3 in ihrem Umfangsbereich stromlinienförmig gestaltet ist, etwa nach Art der angeströmten Kante eines Tragflügels. Es hat sich gezeigt, daß der Verschleiß hierdurch erheblich minimiert wird.

Wie man aus Figur 14 erkennt, weist die Vorrichtung zwei Hohlwellen 1, 2 auf. Den beiden Hohlwellen ist jeweils ein Scheibenpaket 3 beziehungsweise 4 zugeordnet. Die Scheiben sind parallel zueinander angeordnet. Die Scheiben 3 sind mit der Hohlwelle 1 drehfest verbunden, und die Scheiben 4 mit der Hohlwelle 2.

Die Scheiben 3, 4 bestehen aus porösem keramischen Material mit einer Keramikmembran, die, die äußere Scheibenfläche bildet. Wie aus den Figuren 17 und 18 erkennbar, sind sie mit Kanälen versehen. Da sich die Figuren 17 und 18 auf ein Segment der Scheiben 3 beziehen, erkennt man dort die Kanäle 3.1. Die Kanäle sind radial angeordnet. Sie verlaufen somit vom Umfangsbereich des Segmentes zur Hohlwelle 3 und stehen mit deren Innenraum in leitender Verbindung. Gewisse Abweichungen von der radialen Richtung sind möglich.

Die betreffende Hohlwelle sowie die zugeordneten Membranscheiben werden hier als "Paket" bezeichnet. Dabei ist das aus Hohlwelle 1 und Scheiben 3 gebildete Paket genau gleich gestaltet und gleichartig aufgebaut, wie das aus Hohlwelle 2 und den Membranscheiben 4 aufgebaute Paket. Es wären jedoch auch Abweichungen hiervon möglich. So könnten beispielsweise die Scheiben des einen Paketes einen größeren Durchmesser als die Scheiben des anderen Paketes haben. Im vorliegenden Falle sind die Scheiben kreisförmig. Auch hier wären Abweichungen möglich. Beispielsweise käme eine ovale Form in Betracht.

Die beiden Pakete sind in einem Behälter 5 angeordnet. Der Behälter 5 weist einen Einlaß 5.1 sowie einen Auslaß 5.2 auf. Die beiden Hohlwellen 1, 2 weisen an ihren oberen Enden Auslässe 1.1 beziehungsweise 2.1 auf.

Die Vorrichtung arbeitet wie folgt:

Dem Behälter wird durch Einlaß 5.1 das zu behandelnde Medium zugeführt. Der Grundstoff gelangt durch die Poren des keramischen Materiales der Keramikscheiben in die Kanäle 3.1 beziehungsweise 4.1 - die letztgenannten hier nicht dargestellt - als Permeat. Das Permeat gelangt von den Kanälen in den Innenraum der beiden Hohlwellen 1, 2 und wird an den Auslässen 1.1, 2.1 abgeführt.

Was nicht durch die Poren des Keramikmaterials hindurchzudringen vermag, gelangt als Retentat zum Auslaß 5.2 des Behälters 5.

Aus der Darstellung gemäß Figur 15 erkennt man, daß die Membranscheiben 3 des einen Paketes mit den Membranscheiben 4 des anderen Paketes übehappen. Im Überlappungsbereich 6 entsteht eine Turbulenz im Medium. Diese hat eine Reinigungswirkung an der Oberfläche der Membranscheiben zur Folge. Die spezifische Permeationsleistung wird groß, und der spezifische Energiebedarf wird klein.

Eine weitere Möglichkeit besteht darin, eine noch größere Anzahl von Paketen innerhalb ein- und derselben Vorrichtung vorzusehen. So kann beispielsweise ein Paket zentral angeordnet werden, während die übrigen Pakete konzentrisch um das zentrale Paket herumgruppiert werden. Die Membranscheiben des dritten Teilgebietes "Membranscheiben/Membranscheiben" können derart aufgebaut und gestaltet sein, wie die Membranscheiben des zweiten Teilgebietes "Membranscheiben/Dummyscheiben".

## Patentansprüche

1. Vorrichtung zur Filtration von fließfähigen Medien;
1.1 mit einem ersten Paket von scheibenförmigen Hohlkörpern (3), die parallel zueinander und in gegenseitigem Abstand angeordnet sind und deren Wände aus einem Siebmaterial bestehen;
1.2 mit einer ersten Hohlwelle (1), die die Hohlkörper (3) durchdringt, mit diesen drehfest verbunden ist, einen Antrieb aufinreist, und deren Innenraum mit den Innenräumen der Hohlkörper (3) in leitender Verbindung steht;
1.3 mit einem zweiten Paket von scheibenförmigen Hohlkörpern (4), die gleichartig zu den Hohlkörpern (3) angeordnet sind;
1.4 mit einer zweiten Welle (2), die gleichartig zur ersten angeordnet ist;
1.5 die beiden Pakete mit ihren Wellen (1, 2) sind derart gestaltet und angeordnet, daß die Hohlkörper (3) des ersten Paketes verzahnungsartig in die Zwischenräume zwischen den Hohlkörpern (4) des zweiten Paketes eingreifen;
1.6 die Pakete und ihre Wellen (1, 2) sind von einem Behälter (5) umschlossen;
1.7 der Behälter (5) weist einen Einlaß (5.1) für das zu behandelnde Medium sowie einen Auslaß (5.2) für das Retentat auf;
1.8 die Hohlwellen (1, 2) weisen jeweils einen Auslaß (1.1, 2.1) für das Filtrat auf;
1.9 die Hohlkörper (3, 4) sind im selben Drehsinn angetrieben;
1.10 die Relativgeschwindigkeit der Hohlkörper (3, 4) ist im Überdeckungsbereich - in radialer Richtung gesehen - im wesentlichen konstant;
**dadurch gekennzeichnet, daß**
1.11 die Hohlkörper (3, 4) mit unterschiedlichen Drehzahlen angetrieben werden.

2. Vorrichtung nach Anspruch 1, **gekennzeichnet durch** die folgenden Merkmale:
2.1 die Hohlkörper (4) des zweiten Paketes weisen Öffnungen auf, **durch** welche Medium gegen die Wände der ersten Hohlkörper gerichtet wird.

3. Vorrichtung nach Anspruch 1 oder 2, **dadurch gekennzeichnet, daß** die scheibenförmigen Körper (4) des zweiten Paketes an ihren Außenflächen Elemente zum Aufwirbeln von Medium aufweisen.

4. Vorrichtung nach einem der Ansprüche 1 bis 3, **dadurch gekennzeichnet, daß** auch die scheibenförmigen Hohlkörper (4) des zweiten Paketes Wände aus Siebmaterial aufweisen.

5. Vorrichtung nach einem der Ansprüche 1 bis 4, **dadurch gekennzeichnet, daß** der Filtratauslaß unter Unterdruck steht.

6. Vorrichtung nach einem der Ansprüche 1 bis 5, **dadurch gekennzeichnet, daß** der Filtratauslaß unter Überdruck steht.

7. Vorrichtung nach einem der Ansprüche 1 bis 6, **dadurch gekennzeichnet, daß** Medium im Behälter (5) unter Druck steht.

8. Vorrichtung zur Querstrom-Permeation von fließfähigen Medien mittels Membranen;
8.1 mit einem ersten Paket von scheibenförmigen Membrankörpem (30) (Membranscheiben), die parallel zueinander und in gegenseitigem Abstand angeordnet sind;
8.2 die Membranscheiben (30) bestehen aus keramischem Material;
8.3 die Membranscheiben (30) sind mit Radialkanälen (3.1) versehen;
8.4 mit einer ersten Hohlwelle (1), die die Membranscheiben (30) durchdringt, mit diesen drehfest verbunden ist, einen Antrieb aufweist, und deren Innenraum mit den Radialkanälen (3.1) der Membranscheiben (30) in leitender Verbindung steht;
8.5 mit einem zweiten Paket von Membranscheiben (30), das gleich dem ersten Paket angeordnet und aufgebaut ist;
18.6 mit einer zweiten Hohlwelle (2), die gleich der ersten Hohlwelle (1) angeordnet und aufgebaut ist und der die Membranscheiben (30) zugeordnet sind;
8.7 die beiden Pakete mit ihren Hohlwellen (1, 2) sind derart gestaltet und angeordnet, daß die Membranscheiben (30) des einen Paketes in die Lücken zwischen einander benachbarten Membranscheiben (30) des anderen Paketes eingreifen;
8.8 die Pakete und die Hohlwellen (1, 2) sind von einem Behälter (5) umschlossen;
8.9 der Behälter weist einen Einlaß (5.1) für das zu behandelnde Medium sowie einen Auslaß (5.2) für das Retentat auf;
8.10 die Hohlwellen (1, 2) weisen jeweils einen Auslaß (1.1, 2.1) für das Permeat auf;
8.11 den Membranscheiben (3, 4) ist ein Antrieb zugeordnet, um diese in gleiche Drehrichtung zu versetzen;
8.12 die Relativgeschwindigkeit der Scheiben (3, 4) ist im Überdeckungsbereich - in radialer Richtung gesehen - im wesentlichen konstant, **dadurch gekennzeichnet, daß**
8.13 die Membranscheiben (3, 4) mit unterschiedlichen Drehzahlen angetrieben werden.

9. Vorrichtung nach Ansprüch 8, **dadurch gekennzeichnet, daß** der Permeatanschluß (1.1, 2.1) unter Unterdruck steht.

10. Vorrichtung nach Ansprüche 8, **dadurch gekennzeichnet, daß** der Permeatanschluß (1.1, 2.1) unter Überdruck steht.

11. Vorrichtung nach einem der Ansprüche 8 bis 10, **dadurch gekennzeichnet, daß** sich der Querschnitt der Kanäle (3.1) in radialer Richtung von außen nach innen verringert.

12. Vorrichtung nach einem der Ansprüche 8 bis 11, **dadurch gekennzeichnet, daß** die Umfangsbereiche der Membranscheiben (30, 30) - in Seitenansicht gesehen - gerundet sind, vorzugsweise wenigstens annähernd die Gestalt der angeströmten Kante eines Tragflügels aufweisen.

13. Vorrichtung nach einem der Ansprüche 8 bis 12, **dadurch gekennzeichnet, daß** in einem Zylinderschnitt gesehen die Querschnittsfläche der Permeatkanäle (3.1) wesentlich kleiner als die Querschnittsfläche des umgebenden Keramikmaterials ist.

14. Vorrichtung nach Anspruch 13, **dadurch gekennzeichnet, daß** das Verhältnis der Querschnittsflächen von Permeatkanälen zum umgebenden Keramikmaterial 0,5 oder weniger beträgt.

15. Vorrichtung nach einem der Ansprüche 8 bis 14, **dadurch gekennzeichnet, daß** das Medium im Behälter (5) unter Druck steht.

## Claims

1. An apparatus for the filtration of free-flowing media;
1.1 with a first package of disk-like hollow bodies (3) which are arranged parallel with respect to each other and at a mutual distance from each other, and whose walls consist of a screening material;
1.2 with a first hollow shaft (1) which penetrates the hollow body (3), is torsionally rigidly connected with the same, comprises a drive, and whose inner cavity is in conductive connection with the inner cavities of the hollow bodies (3);
1.3 with a second package of disk-like hollow bodies (4) which are arranged in a similar manner relative to the hollow bodies (3);
1.4 with a second shaft (2) which is arranged in a similar manner relative to the first one;
1.5 with the two packages with their shafts (1, 2) being configured and arranged in such a way that the hollow bodies (3) of the first package engage in a gearing manner into the intermediate spaces between the hollow bodies (4) of the second package;
1.6 with the packages and their shafts (1, 2) being enclosed by a container (5);
1.7 with the container (5) having an inlet (5.1) for the medium to be treated and an outlet (5.2) for the retentate;
1.8 with the hollow shafts (1, 2) each having an outlet (1.1, 2.1) for the filtrate;
1.9 with the hollow bodies (3, 4) being driven in the same direction of rotation;
1.10 with the relative speed of the hollow bodies (3, 4) being substantially constant in the overlapping region, as seen in the radial direction; **characterized in that**
1.11 the hollow bodies (3, 4) are driven with different speeds.

2. An apparatus according to claim 1, **characterized by** the following features:
2.1 the hollow bodies (4) of the second package comprise openings through which medium is directed against the walls of the first hollow bodies.

3. An apparatus according to claim 1 or claim 2, **characterized in that** the disk-like bodies (4) of the second package comprise elements for swirling medium on their outside surfaces.

4. An apparatus according to one of the claims 1 to 3, **characterized in that** the disk-like hollow bodies (4) of the second package comprise walls made of screening material.

5. An apparatus according to one of the claims 1 to 4, **characterized in that** the filtrate outlet is under negative pressure.

6. An apparatus according to one of the claims 1 to 5, **characterized in that** the filtrate outlet is under excess pressure.

7. An apparatus according to one of the claims 1 to 6, **characterized in that** the medium in the container (5) is under pressure.

8. An apparatus for cross-flow permeation of free-flowing media by means of membranes;
8.1 with a first package of disk-like membrane bodies (30) (membrane disks) which are arranged parallel with respect to each other and at a mutual distance from each other;
8.2 with the membrane disks (30) consisting of ceramic material;
8.3 with the membrane disks (30) being provided with radial channels (3.1);
8.4 with a first hollow shaft (1) which penetrates the membrane disks (30), is joined to the same in a torsionally rigid manner, comprises a drive, and whose inner cavity is in conductive connection with the radial channels (3.1) of the membrane disks (30);
8.5 with a second package of membrane disks (30) which is arranged and configured similar to the first package;
8.6 with a second hollow shaft (2) which is arranged and configured similar to the first hollow shaft (1), and to which the membrane disks (30) are associated;
8.7 with the two packages with their hollow shafts (1, 2) being configured and arranged in such a way that the membrane disks (30) of the one package engage into the gaps of mutually adjacent membrane disks (30) of the other package;
8.8 with the packages and the hollow shafts (1, 2) being enclosed by a container (5);
8.9 with the container comprising an inlet (5.1) for the medium to be treated and an outlet (5.2) for the retentate;
8.10 with the hollow shafts (1, 2) each comprising an outlet (1.1, 2.1) for the permeate;
8.11 with the membrane disks (3, 4) being associated with a drive in order to make the same rotate in the same direction;
8.12 with the relative speed of the disks (3,4) being substantially constant in the overlapping region, as seen in the radial direction;
**characterized in that**
8.13 the membrane disks (3, 4) are driven with different speeds of rotation.

9. An apparatus according to claim 8, **characterized in that** the permeate connection (1.1, 2.1) is under negative pressure.

10. An apparatus according to claim 8, **characterized in that** the permeate connection (1.1, 2.1) is under excess pressure.

11. An apparatus according to one of the claims 8 to 10, **characterized in that** the cross section of the channels (3.1) decreases in the radial direction from the outside to the inside.

12. An apparatus according to one of the claims 8 to 11, **characterized in that** the circumferential regions of the membrane disks (30, 30) are rounded off, as seen in a side view, and preferably have at least approximately the shape of the edge of a hydrofoil against which the flow impinges.

13. An apparatus according to one of the claims 8 to 12, **characterized in that** as seen in a cylindrical sectional view the cross-sectional surface area of the permeate channels (3.1) is substantially smaller than the cross-sectional surface area of the ambient ceramic material.

14. An apparatus according to claim 13, **characterized in that** the ratio of cross-sectional surface areas of permeate channels to ambient ceramic material is 0.5 or less.

15. An apparatus according to one of the claims 8 to 14, **characterized in that** the medium in the container (5) is under pressure.

## Revendications

1. Dispositif pour la filtration de matières fluides,
1.1 avec un premier paquet de corps creux (3) en forme de disques, disposés parallèlement et à distance les uns des autres et dont les parois se composent d'un matériau filtrant ;
1.2 avec un premier arbre creux (1) qui traverse les corps creux (3), relié avec ceux-ci de manière solitaire en rotation, possède un entraînement, et dont l'espace intérieur communique avec les espaces intérieurs des corps creux (3) ;
1.3 avec un second paquet de corps creux (4) en forme du disques qui sont disposés de la même manière que les corps creux (3) ;
1.4 avec un second arbre (2) disposé de la même manière que le premier ;
1.5 les deux paquets ainsi que leurs arbres (1, 2) sont conformés et disposés de telle manière que les corps creux (3) du premier paquet se mettent en prise à la façon d'un engrenage dans les espaces compris entre les corps creux (4) du second paquet ;
1.6 les paquets et leurs arbres (1, 2) sont entourés par un contenant (5) ;
1.7 le contenant (5) possède une entrée (5.1) pour le fluide à traiter et une sortie (5.2) pour la matière retenue ;
1.8 les arbres (1, 2) possèdent chacun une sortie (1.1, 2.1) pour le fluide filtré ;
1.9 les corps creux (3, 4) sont entraînés dans le même sens de rotation ;
1.10 la vitesse relative des corps creux (3, 4) est sensiblement constante dans la zone de chevauchement, vue dans le sens radial ;
**caractérisé en ce que**
1.11 les corps creux (3, 4) sont entraînés à des vitesses de rotation différentes.

2. Dispositif selon la revendication 1, **caractérisé en ce que** :
2.1 les corps creux (4) du second paquet possèdent des ouvertures à travers lesquelles le fluide est dirigé vers les parois des premiers corps creux.

3. Dispositif selon la revendication 1 ou 2, **caractérisé en ce que** les corps creux (4) en forme de disque du second paquet possèdent sur leur surface extérieure des éléments destinés à provoquer une turbulence du fluide.

4. Dispositif selon l'une quelconque des revendications 1 à 3, **caractérisé en ce que** les corps creux (4) du second paquet possèdent eux aussi des parois en matériau filtrant.

5. Dispositif selon l'une quelconque des revendications 1 à 4, **caractérisé en ce que** la sortie de fluide filtré se trouve sous dépression.

6. Dispositif selon l'une quelconque des revendications 1 à 5, **caractérisé en ce que** la sortie de fluide filtré se trouve sous surpression.

7. Dispositif selon l'une quelconque des revendications 1 à 6, **caractérisé en ce que** le fluide dans le contenant (5) est sous pression.

8. Dispositif pour l'imprégnation par courant transversal de matières fluides au moyen de membranes ;
8.1 avec un premier paquet de corps de membrane en forme de disques (30) (disques de membrane), qui sont disposés parallèlement et à distance les uns des autres ;
8.2 les disques de membrane (30) se composent de matériau céramique ;
8.3 les disques de membrane (30) sont pourvus de canaux radiaux (3.1) ;
8.4 avec un premier arbre creux (1) qui traverse les disques de membrane (30), est relié avec ceux-ci de manière solidaire en rotation, possède un entraînement, et dont l'intérieur communique avec les canaux radiaux (3.1) des disques de membrane (30) ;
8.5 avec un second paquet de disques de membrane (30) disposé et construit de la même manière que le premier paquet ;
8.6 avec un second arbre creux (2) disposé et construit de la même manière que le premier arbre creux (1) et associé aux disques de membrane (30) ;
8.7 les deux paquets ainsi que leurs arbres creux (1, 2) sont conformés et disposés de telle matière que les disques de membrane (30) d'un paquet se mettent en prise dans les espaces compris entre les disques de membrane (30) voisins de l'autre paquet ;
8.8 les paquets et les arbres creux (1, 2) sont enfermés dans un contenant (5) ;
8.9 le contenant possède une entrée (5.1) pour le fluide à traiter et une sortie (5.2) pour la matière retenue ;
8.10 les arbres creux (1, 2) possèdent chacun une sortie (1.1, 2.1) pour le fluide d'imprégnation ;
8.11 les disques de membrane (3, 4) sont associés à un entraînement qui les fait tourner dans le même sens de rotation ;
8.12 la vitesse relative des disques (3, 4) est sensiblement constante dans la zone de chevauchement vue dans le sens radial ;
**caractérisé en ce que**
8.13 les disques de membrane (3, 4) sont entraînés à des vitesses de rotation différentes.

9. Dispositif selon la revendication 8, **caractérisé en ce que** le raccord de fluide d'imprégnation (1.1, 2.1) se trouve sous dépression.

10. Dispositif selon la revendication 8, **caractérisé en ce que** le raccord de fluide d'imprégnation (1.1, 2.1) se trouve sous surpression.

11. Dispositif selon l'une quelconque des revendications 8 à 10, **caractérisé en ce que** la section des canaux (3.1) diminue de l'extérieur vers l'intérieur dans le sens radial.

12. Dispositif selon l'une quelconque des revendications 8 à 11, **caractérisé en ce que** les zones de circonférence des disques de membrane (30, 30) sont arrondies, en vue de côté, et ont de préférence approximativement la forme du bord d'attaque d'une aile portante.

13. Dispositif selon l'une quelconque des revendications 8 à 12, **caractérisé en ce que**, vue en coupe cylindrique, la surface de section des canaux à produit d'imprégnation (3.1) est sensiblement plus petite que la surface de section du matériau céramique environnant.

14. Dispositif selon la revendication 13, **caractérisé en ce que** le rapport entre la surface de section des canaux à fluide d'imprégnation et le matériau céramique environnant est de 0,5 ou moins.

15. Dispositif selon l'une quelconque des revendications 8 à 14, **caractérisé en ce que** le fluide dans le contenant (5) est sous pression.
